(19) Europäisches Patentamt
European Patent Office
Office européen des brevets

(11) **EP 4 010 185 B1**

(12) **EUROPEAN PATENT SPECIFICATION**

(45) Date of publication and mention
of the grant of the patent:
**22.10.2025 Bulletin 2025/43**

(21) Application number: **20764772.8**

(22) Date of filing: **06.08.2020**

(51) International Patent Classification (IPC):
**B32B 5/26** *(2006.01)* **B32B 1/00** *(2024.01)*
**B32B 3/04** *(2006.01)* **B32B 5/08** *(2006.01)*
**B32B 5/18** *(2006.01)* **B32B 7/022** *(2019.01)*
**C08J 9/33** *(2006.01)* **G10K 11/168** *(2006.01)*

(52) Cooperative Patent Classification (CPC):
**B32B 1/00; B32B 3/04; B32B 5/022; B32B 5/08;
B32B 5/18; B32B 5/245; B32B 5/26; B32B 7/02;
B32B 7/022; C08J 9/33; G10K 11/168;**
B32B 2250/04; B32B 2250/05; B32B 2250/40;
B32B 2260/023; (Cont.)

(86) International application number:
**PCT/IB2020/057448**

(87) International publication number:
**WO 2021/024223 (11.02.2021 Gazette 2021/06)**

(54) **A MULTILAYER STRUCTURE FOR AUTOMOTIVE COMPONENTS**

MEHRSCHICHTSTRUKTUR FÜR KRAFTFAHRZEUGKOMPONENTEN

STRUCTURE MULTICOUCHE POUR PIÈCES AUTOMOBILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.08.2019 IT 201900014433**

(43) Date of publication of application:
**15.06.2022 Bulletin 2022/24**

(73) Proprietor: **Adler Evo S.r.l.**
**10060 Virle Piemonte (IT)**

(72) Inventors:
• **GASTALDI, Francesco**
**12040 Margarita (IT)**
• **LESAGE, Giorgio**
**10128 Torino (IT)**
• **PEROO', Roberto**
**10070 Levone (IT)**

(74) Representative: **Cattaneo, Elisabetta et al**
**Notarbartolo & Gervasi S.p.A.**
**Viale Achille Papa, 30**
**20149 Milano (IT)**

(56) References cited:
**WO-A1-2006/071464     JP-A- 2007 111 866**
**US-A1- 2014 124 972**

(52) Cooperative Patent Classification (CPC): (Cont.)
B32B 2260/046; B32B 2262/0246; B32B 2262/0276;
B32B 2262/0284; B32B 2262/04; B32B 2262/101;
B32B 2262/106; B32B 2262/14; B32B 2266/0278;
B32B 2272/00; B32B 2307/102; B32B 2307/304;
B32B 2307/3065; B32B 2307/54; B32B 2307/546;
B32B 2307/5825; B32B 2307/718; B32B 2307/72;
B32B 2307/738; B32B 2605/08; B60R 13/08;
C08J 2375/04

## Description

### FIELD OF THE INVENTION

The present invention relates to a multilayer structure that achieves desired sound absorption, thermal insulation, structural-stiffness performances, lightness while being at the same time environmentally sustainable.

This novel multilayer structure is suitable for preparing several automotive components, placed in different vehicle locations. The multilayer structure is made by using automotive production scraps, cut-outs, off spec products, having therefore a positive impact on environmental footprint as it will be evident below. Moreover, it reduces the weight of vehicle itself, decreasing energy consumption, while maintaining valid structural and mechanical properties.

### STATE OF THE ART

Nowadays automotive industry struggles with several problems dealing with needs deriving both from environmental protection and passengers and citizens welfare and comfort: vehicle mass reduction, emission significant decrease, better use of resources employed, namely focusing on reducing by-products or production scraps, cut-outs, off spec products et al.

This will be more and more valid within the next years, when at least 25% of Internal Combustion Engines will be replaced by Electric Motors, making therefore the need of reducing mass more stringent. This need derives from the necessity of reducing weight to gain mass and space for electric batteries, and to reduce the energy consumption.

In addition to this, already today drivers and passengers are demanding quieter interiors, while cars exterior noise reduction will be mandatory, at least in Europe, according to EEC regulation nr. 540/2014.

In order to dampen the engine noise and prevent heat and energy dissipation in the engine compartment, automotive suppliers are demanded to provide specific "shields" or panels/components placed in different vehicle locations, to overcome the insulation issues.

Such components are normally made by inorganic compounds bound with thermosetting resins, usually combined with layers of different area/weight of organic material with glass fibers/fillers (SMC) or even rubber (filled with inorganic materials).

Alternatively, engine "bonnets" are available. They are manufactured with inorganic compounds combined with natural fibers, reinforced with thermosetting polymer injection moulding parts. The latter are treated for oil/fluids/fire resistance before assembling. The materials employed for the structural layer are usually natural fibers, sometimes bound with thermosetting powders or with thermoplastic fibers, sometimes, such as in US 2014/124972 A1, polyurethane foams are applied for the same function. Other coatings with aesthetic/functional surface material together with glued layers, mainly for thermal insulation, need to be applied.

At present, such multilayer thick structures, not only have the problem that the decrease in thickness, necessary to ensure bending stiffness, dramatically reduces sound absorption, but they also suffer from the so called "sandwich fragility".

Such phenomenon is also connected to the use of polyurethane lightweight foams, which might decrease the weight of the total structure, but causes a constant automotive industry issue, since it is a source of structure weakness.

As a matter of fact, the known technology for these kinds of automotive components meets acoustical and thermal performances, but in order to ensure the structural properties and to satisfy stability performances such components resulted to be very heavy, not flexible, with limited integration capability and reduced structural properties.

In fact, a typical weight value of the present shielding components (with respect to the surface), obtained via injection moulding is between 3.0 and 4.0 $kg/m^2$ and the material density is between 1400-1500 $kg/m^3$.

Hence, it is felt the need to provide lighter structures and reduce vehicles mass, without losing materials performances. This requirement is especially profitable in electric vehicles, where demand of weight reduction may offer additional opportunities to increase their range, allowing to use the mass gained here to board more batteries.

Automotive suppliers are therefore demanded to find a compromise and develop lighter, structurally resistant and flexible structures, to meet these challenging requests.

Together with the above targets it is necessary to find sustainable solutions, able to combine an environmentally friendly material together with high performance structures.

Therefore, the main object of the present invention consists in providing automotive components made of high-performance light structures as well as recycling automotive wastes materials, avoiding their landfill or incineration.

### SUMMARY OF THE INVENTION

The inventors of the present invention have surprisingly found that automotive polyurethane scraps can be used by assembling them together with other materials, avoiding car polyurethane component waste disposal.

Said polyurethane scraps can be used to manufacture a multilayer structure for preparing further car components.

Therefore, the present invention concerns a multilayer structure comprising:

- two outer layers α1, made of a non-woven material;
- at least one intermediate layer β, made of a glass wool fiber;
- at least one intermediate polyurethane layer y;

wherein the at least one intermediate polyurethane layer γ is made of polyurethane deriving from polyurethane automotive scraps, and wherein the at least one intermediate polyurethane layer γ has a density value in the range from 20 to 30 g/l, and a compression set of 1000-1200 g/cm$^2$ as measured according to DIN EN ISO 1856.

In a preferred embodiment the multilayer structure according to the invention has the following layer sequence:

1) an outer layer α1;
2) at least one intermediate layer β;
3) at least one intermediate polyurethane layer γ, having a density value in the range from 20 to 30 g/l; and
4) an outer layer α1.

In another preferred embodiment the multilayer structure according to the invention has the following layer sequence:

1) an outer layer α1;
2) at least one intermediate polyurethane layer γ having a density value in the range from 20 to 30 g/l;
3) at least one intermediate layer β; and
4) an outer layer α1.

Advantageously, the layers 2) and 3) of the preferred embodiments of the invention are repeated at least twice.

The present invention further relates to a process for preparing the multilayer structure of the invention, said process comprising the following steps:

a) providing polyurethane automotive scraps having a density value in the range from 20 to 30 g/l;
b) cutting a glass wool fiber into sheets having a bidimensional shape suitable for a molding step h), thus obtaining at least one sheet of layer β, made of a glass wool fiber;
c) cutting the polyurethane automotive scraps of step a) into sheets having a bidimensional shape suitable for a molding step h), thus obtaining at least one sheet of layer γ, made of polyurethane scraps having a density value in the range from 20 to 30 g/l, and a compression set of 1000-1200 g/cm2 as measured according to DIN EN ISO 1856.
d) cutting a non-woven material into sheets having a bidimensional shape twice of the bidimensional shape of layer β or of layer γ, thus obtaining at least one non-woven sheet;
e) folding the at least one non-woven sheet of step d), thus obtaining two outer layers α1;
f) inserting the layers β and γ, of steps b) and c), respectively between the two outer layers α1 of e) thus obtaining a sandwich assembly;
g) uploading the sandwich assembly into a heat mold device;
h) molding the uploaded sandwich assembly via thermocompression, at a temperature in the range from 190 to 200°C;
i) obtaining the multilayer structure of the invention.

Advantageously the inserting step f) allow to obtain different sandwich assemblies for preparing different multilayer structures as it will be evident from the figures and the examples reported below.

As it will be more evident below in the experimental part the multilayer structure of the invention achieves desired sound absorption, valid structural and mechanical performances, while at the same time being lighter and more sustainable, with respect to the known structures for automotive purposes.

Advantageously, the multilayer structure of the invention has hence at the same time balanced integration of functions, i.e. thermal, acoustical, and mechanical functions. The properties of the multilayer are also allowed by the sandwich assembly of materials of the multilayer structure of the invention, which achieves at the same time the scope to be lighter than the known structures, avoiding the problem of materials "sandwich fragility" with respect to the known structures, increasing also overall resiliency, flexibility and resistance over them.

In a first preferred embodiment, the multilayer structure comprises the at least one intermediate layer β and the at least one intermediate layer γ repeated alternately at least 2 times.

Without being bound to any theory and as it will be apparent from the detailed description and from the examples, the features of the multilayer structure and the combination of the materials used, allow to obtain a final car article having a good compromise between lightness, mechanical and structural properties, weight and sustainability.

Therefore, the present invention provides an automotive component made of the multilayer structure of the invention.

Said automotive component encloses optimal technical features together with the possibility of reducing byproducts and production discarded materials as well as recycling automotive wastes materials.

It is evident that the multilayer structure obtained through the recovery process of polyurethane automotive scraps having a density value in the range from 20 to 30 g/l and the automotive component made thereof, enable carmakers to reach the compromise of having at the same time a resistant, stiff material and a light, flexible product, while ensuring the acoustical and thermal performances.

## DESCRIPTION OF THE FIGURES

Figure 1 shows a multilayer structure of the invention as prepared in Examples 1-4;

Figure 2 shows an alternative multilayer structure of the invention as prepared in Examples 9, 10;

Figure 3 shows a comparison of acoustic tests of the samples of the invention, as prepared in Examples 9 and 10 without airgap;

Figure 4 shows a comparison of acoustic tests of the samples of the invention, as prepared in Examples 9 and 10 with 10 mm airgap;

Figure 5 shows a stone chipping test picture of the multilayer structure of the invention, prepared according to Example 9; and

Figure 6 shows a stone chipping test picture of the multilayer structure of the invention, prepared according to Example 10.

## DETAILED DESCRIPTION OF THE INVENTION

The present invention therefore relates to a multilayer structure comprising:

- two outer layers $\alpha 1$, made of a non-woven material;
- at least one intermediate layer $\beta$, made of a glass wool fiber;
- at least one intermediate polyurethane layer y;

wherein the at least one intermediate polyurethane layer $\gamma$ is made of polyurethane deriving from polyurethane automotive scraps, and wherein the at least one intermediate polyurethane layer $\gamma$ has a density value in the range from 20 to 30 g/l, and a compression set of 1000-1200 g/cm2 as measured according to DIN EN ISO 1856.

In the present invention with the following terms:

- "scraps" or "automotive scraps" it is meant any scraps, wastes, discarded polyurethane materials, deriving from polyurethane automotive pieces and having a density value in the range from 20 to 30 g/l;
- "outer" it is meant any external layer, acting as top and bottom layers, employed in the multilayer structure;
- "intermediate" it is meant any internal layer, placed in between the outer layers, present in the multilayer structure.

The multilayer structure comprises at least one intermediate polyurethane layer $\gamma$ deriving from automotive scraps and having a density value in the range from 20 to 30 g/l, which therefore combines lightness, remarkable mechanical and structural properties, as will be clear from the detailed description and the examples, and allows a sustainable polyurethane wastes recycling.

Surprisingly these features have been reached by using the polyurethane scraps directly for preparing the multilayer structures of the invention without being treated or subjected to any kind of chemical treatments before assembling to the final structure.

In a first preferred embodiment, the multilayer structure comprises the at least one intermediate layer $\beta$ made of a glass wool fiber and/or the at least one intermediate layer $\gamma$, wherein the at least one intermediate layer $\beta$ and/or the at least one intermediate layer $\gamma$ are repeated, independently each other, at least twice.

In a second preferred embodiment, the multilayer structure comprises the at least one intermediate layer $\gamma$ with the at least one intermediate layer $\beta$ made of a glass wool fiber in between.

In a preferred embodiment the multilayer structure according to the invention has the following layer sequence:

1) an outer layer $\alpha 1$, made of a non-woven material;
2) at least one intermediate layer $\beta$, made of a glass wool fiber;
3) at least one intermediate polyurethane layer $\gamma$, made of polyurethane automotive scraps having a density value in the range from 20 to 30 g/l; and
4) an outer layer $\alpha 1$, made of a non-woven material.

In another preferred embodiment the multilayer structure according to the invention has the following layer sequence:

1) an outer layer $\alpha 1$, made of a non-woven material;
2) at least one intermediate polyurethane layer $\gamma$ having a density value in the range from 20 to 30 g/l;
3) at least one intermediate layer $\beta$, made of a glass wool fiber; and
4) an outer layers $\alpha 1$, made of a non-woven material.

Advantageously, the layers 2) and 3) of the preferred embodiments of the invention are repeated at least twice.

According to the invention the intermediate layer $\gamma$ is made of polyurethane deriving from polyurethane automotive scraps. Said polyurethane of the layer $\gamma$ is a lightweight material, having a density value in the range from 20 to 30 g/l, preferably from 22 to 25 g/l.

The density value of the polyurethane scraps can be measured according to well known measurement in the art, for example ISO 845.

More preferably the polyurethane of the layer $\gamma$ has a density of 25 g/l, even more preferably of 22 g/l.

The at least one intermediate polyurethane layer $\gamma$ has preferably an elongation value at break in both directions in a range from 40 to 150 % (according to EN ISO 9073-3).

The at least one intermediate polyurethane layer $\gamma$ has preferably a compression set of 1000-1200 g/cm$^2$ (according to DIN EN ISO 1856).

Advantageously, alongside these properties, the at least one intermediate polyurethane layer $\gamma$ has also sound-absorption and self-extinguishing, not burnable characteristics. The flammability value of the layer $\gamma$ is surprisingly 100 mm/min. The layer $\gamma$ has more preferably a tear resistance in both directions of 14 N/cm$^2$ (according to EN ISO 1798) and an elongation value in both directions of 40%. The multilayer structure comprises two outer layers $\alpha 1$, which are placed one as top layer and the other as bottom layer.

The material of the two outer layers $\alpha 1$, made of a non-woven material, might be chosen on the basis of the final use of the automotive component made of the multilayer structure of the invention. Through different combinations it is possible to change the area of the vehicle where the component can be placed, ensuring a flexible application of the novel materials solution.

In a first embodiment the non-woven material of layer $\alpha 1$ is made of preferably viscose and polyester, more preferably of total weight of 100-120 g/m$^2$ according to EN ISO 9073-1. Advantageously and still more preferably the non-woven material is made of viscose/polyester-PET based fibers, covered with a phenolic coating. The two outer layers $\alpha 1$ made of viscose-polyester-PET based fibers are preferably thin layers more preferably having:

- a thickness at 1 kPa of about 0.78 mm, according to EN ISO 9073-2.
- a maximum tensile strength at break in the machine direction, at a speed of 100 mm/min (according to EN ISO 9073-3) of about 86.7 N/5cm, a maximum tensile strength at break in the cross direction of about 122.1 N/5cm;

The two outer layers $\alpha 1$ made of viscose-polyester-PET based fibers have preferably good flexibility, having an elongation at maximal breaking strength in the machine direction, at a speed of 100 mm/min, according to EN ISO 9073-3, of about 46.7%, and an elongation at maximal breaking strength in the cross direction, at a speed of 100 mm/min, according to EN ISO 9073-3, of about 77.6%. They further possess advantageously oil/water/gasoil repellency, having a value of flammability approximately about 0.

In another embodiment the outer layers $\alpha 1$ are preferably made of a carbon non-woven material, more preferably a needle-punched carbon non-woven material, still more preferably they are made of a PANO (pre-oxidized polyacrylonitrile C-fibers)-polyester fiber, covered with a phenolic coating.

The outer layer $\alpha 1$ made of a carbon non-woven material has preferably a total surface weight in the range from 100 to 120 g/m$^2$, according to EN ISO 9073-1. The two outer layers $\alpha 1$ comprising a carbon non-woven material are preferably thin layers more preferably having:

- a thickness at 1 kPa of about 1 mm, according to EN ISO 9073-2;
- a maximum tensile strength at break in the machine direction, at a speed of 100 mm/min, according to EN ISO 9073-3, of minimum 30 N/5cm and a maximum tensile strength at break in the cross direction of minimum 40 N/5cm.

The two outer layers $\alpha1$ comprising a carbon non-woven material have preferably good flexibility, having an elongation at maximal breaking strength in the machine direction, at a speed of 100 mm/min, according to EN ISO 9073-3, of minimum 30%, and an elongation at maximal breaking strength in the cross direction, at a speed of 100 mm/min, according to EN ISO 9073-3, of minimum 60%.

They further possess oil/water/gazoil repellency, having a value of flammability approximately about 0.

The multilayer structure comprises at least one intermediate layer $\beta$, made of a glass wool fiber. This layer gives good performances in thermal and acoustical insulation of the car engine compartment.

In the layer $\beta$ of the invention the glass wool fiber is preferably bonded with a thermosetting phenolic resin binder (R225) in an amount of 10% with respect to the total weight of the layer $\beta$, with very low formaldehyde emission. The intermediate layer $\beta$ can further comprise a flame retardant additive.

The at least intermediate layer $\beta$ containing the flame retardant additive has preferably a compression load deflection in the range from 3 to 5 kPa at 40% deformation (according to DIN EN ISO 3386/1), a compression set of maximum 8% at 50% deformation (according to DIN EN ISO 1856), an elongation at break of minimum 150% (according to DIN EN ISO 1798) and a tensile strength of minimum 150 kPa (according to DIN EN ISO 1798).

In a preferred and advantageous embodiment of the invention, the multilayer structure comprises:

- two outer layers $\alpha1$, made of a non-woven material consisting in a blend of 50/50 viscose-polyester-PET based fibers covered with a phenolic coating, having a total surface weight in the range from 100 to 120 g/m$^2$ with respect to a multilayer structure sample of 100cm$^2$ and a thickness of 0.78 mm.
- at least one intermediate glass wool layer $\beta$, made of a glass wool fiber bonded with a thermosetting phenolic resin binder (R225) in an amount of 10% with respect to the total weight of the layer $\beta$, with very low formaldehyde emission, and a flame retardant additive.
- at least one intermediate polyurethane layer $\gamma$ having a density value of 25 g/l.

In another preferred and advantageous embodiment of the present invention, the multilayer structure comprises:

- two carbon non-woven outer layers $\alpha1$, made of a PANO (pre-oxidized polyacrylonitrile C-fibers)-polyester fiber covered with a phenolic coating, having a total surface weight in the range from 100 to 120 g/m$^2$ with respect to a multilayer structure sample of 100 cm$^2$ and a thickness at 1 KPa of 1 mm.
- at least one intermediate glass wool layer $\beta$, made of a glass wool fiber bonded with a thermosetting phenolic resin binder (R225) in an amount of 10% with respect to the total weight of the layer $\beta$, with very low formaldehyde emission, and comprising a flame retardant additive.
- at least one intermediate polyurethane layer $\gamma$ having a density value of 25 g/l.

In another preferred and advantageous embodiments of the invention, the multilayer structure comprises:

- two outer layers $\alpha1$, made of a non-woven material consisting in a blend of 50/50 viscose-polyester-PET based fibers covered with a phenolic coating, having a total surface weight in the range from 100 to 120 g/m$^2$ with respect to a multilayer structure sample of 100cm$^2$ and a thickness of 0.78 mm.
- at least one intermediate glass wool layer $\beta$, made of a glass wool fiber bonded with a thermosetting phenolic resin binder (R225) in an amount of 10% with respect to the total weight of the layer $\beta$, with very low formaldehyde emission, and comprising a flame retardant additive.
- at least one intermediate polyurethane layer $\gamma$ having a density value of 22 g/l.

In another preferred and advantageous embodiments of the present invention, the multilayer structure comprises:

- two carbon non-woven outer layer $\alpha1$, made of a PANO (pre-oxidized polyacrylonitrile C-fibers)-polyester fiber covered with a phenolic coating, having a total surface weight in the range from 100 to 120 g/m$^2$ with respect to a multilayer structure sample of 100cm$^2$ and a thickness at 1 kPa of 1 mm.
- at least one intermediate glass wool layer $\beta$, made of a glass wool fiber bonded with a thermosetting phenolic resin binder (R225) in an amount of 10% with respect to the total weight of the layer $\beta$, with very low formaldehyde emission, and comprising a flame retardant additive.
- at least one intermediate polyurethane layer $\gamma$ having a density value of 22 g/l. As above already indicated the layers $\beta$ and $\gamma$ or each one singularly considered are repeated independently each other at least twice as it will be clearer from the experimental part.

For example, the following structure can be cited:

- three layers β can be stacked, to obtain a multilayer structure, in between the two intermediate layers γ and inside the two outer layers α1, and
- two repetition of layers β and γ to obtain a multilayer structure, in between the two outer layers α1.

The multilayer structures of the invention showed very good performances, preferably they showed:

- flexural modulus (E): from 380 to 1600 N/mm$^2$, preferably 550-950 N/mm$^2$ measured according to ISO179 via 3 points flexural method (Charpy method), using 10 rectangular samples of the multilayer structure (50 x 160 mm), through a 10 mm diameter punch at a load speed of 10 mm/min, with a distance between the supports of 100 mm and with a press pressure of 150 bar.
- load to break: from 40 to 80 N, measured according to ISO179, via the 3 points flexural method (Charpy method), above described.
- bending breaking resistance: from 7 to 15 N/mm$^2$, measured via the 3 points flexural method, above described.
- density (kg/m$^3$): from 500 to 1000 Kg/m$^3$ using 3 samples (100 x 100 mm) taken from different parts of the examined sample of the multilayer structure and determining the ratio mass/volume using the approximate values of 0.1 mm for the samples thickness, 0.5 mm for the samples sides and 0.1 g for the samples mass.
- tensile resistance: from 4 to 16 N/mm$^2$ according to ISO179, using 10 rectangular samples of the multilayer structure according to the invention (50 x 160 mm) and pulling the samples with 100 mm/min of advancing speed till breaking.

In another aspect therefore the invention concerns an automotive component made of the multilayer structure of the invention. Among the possible automotive components, the following can be cited: wheelarch, air ducting, rectractable, hard top, trunk floor cover and underbody covers. All the automotive components can be placed on different vehicles and in different locations of the vehicle.

In another aspect, the invention hence concerns a process for preparing the multilayer structure of the invention, said process comprising the following steps:

a) providing polyurethane automotive scraps having a density value in the range from 20 to 30 g/l;
b) cutting a glass wool fiber into sheets having a bidimensional shape suitable for a molding step h), thus obtaining at least one sheet of layer β, made of a glass wool fiber;
c) cutting the polyurethane automotive scraps of step a) into sheets having a bidimensional shape suitable for a molding step h), thus obtaining at least one sheet of layer γ, made of polyurethane scraps, having a density value in the range from 20 to 30 g/l;
d) cutting a non-woven material into sheets having a bidimensional shape twice of the bidimensional shape of layer β or of layer γ, thus obtaining at least one non-woven sheet;
e) folding the at least one non-woven sheet of step d), thus obtaining two outer layers α1 ;
f) inserting the layers β and γ, of steps b) and c), respectively between the two outer layers α1 of e) thus obtaining a sandwich assembly;
g) uploading the sandwich assembly into a heat mold device;
h) molding the uploaded sandwich assembly via thermocompression, at a temperature in the range from 190 to 200°C;
i) obtaining the multilayer structure of the invention.

Preferably, the cutting of steps b), c) and d) are performed with at least one blade having a force of 25 kg/mm.
The inserting step f) provides for inserting the layers β and γ, of steps b) and c) in a desired sandwich assembly having a layer sequence as above indicated in the preferred embodiments of the invention.
The invention will be further detailed with the following experimental part, reporting examples and tests on the multilayer structure, comprising at least one intermediate layer γ made of polyurethane deriving from polyurethane automotive scraps.

**Experimental Part**

Example 1

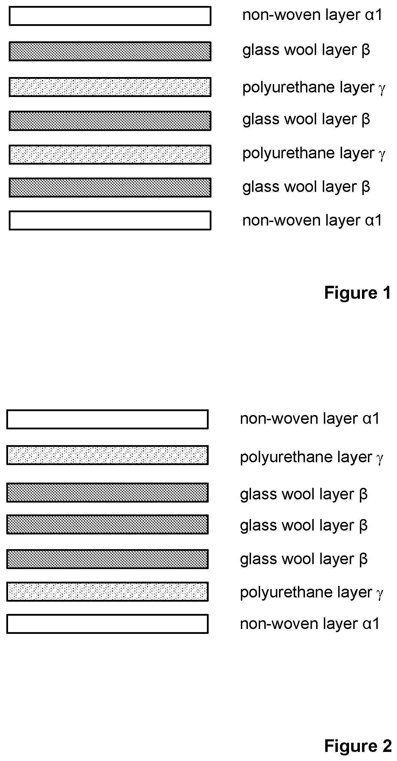

Preparation of a multilayer structure 1, as represented in Figure 1

In a steel thermoforming tool mounted on a vertical press the multilayer structure 1 of Figure 1 was prepared.
With reference to Figure 1 the following multilayer structure was prepared:

- two outer layers α1, made of non-woven viscose-polyester layers comprising polyester, having a total surface weight in the range from 100 to 120 g/m$^2$ with respect to a multilayer structure sample of 100cm$^2$, a thickness of 0.78 mm and made of a blend 50/50 of viscose/black polyester-PET fibers, covered with a phenolic coating.
- three intermediate glass wool layers β, made of a glass wool fiber bonded with a thermosetting phenolic resin binder (R225) in an amount of 10% with respect to the total weight of the layer β, with very low formaldehyde emission, and a flame retardant additive.
- two intermediate polyurethane layers γ having a density value of 25 g/l.

Polyurethane automotive scraps were firstly provided. A glass wool fiber was cut into sheets having a rectangular shape suitable for fitting in the molding device, thus obtaining three sheets of layer β, made of a glass wool fiber. Then polyurethane automotive scraps were cut into sheets having the same rectangular shape of the sheet of glass wool fiber, thus obtaining two sheets of layer γ. The polyurethane sheet had a compression set in the range from 1000 to 1200 g/cm$^3$, a tear resistance in both directions of 14 N/cm$^2$ and an elongation value in both directions between 40-150%. A non-woven material was cut into sheets having a shape twice of the rectangular shape of layer β, thus obtaining one non-woven sheet. The latter was then folded thus obtaining two outer layers α1.

The three layers β and two layers γ, were inserted alternatively according to the layer sequence reported in Figure 1. The final sandwich assembly was hence uploaded into the heat mold device and molded via thermocompression, at a temperature 190-200°C for a time equal or below 60 seconds, thus obtaining the multilayer structure of the invention of Figure 1.

Example 2

Preparation of a multilayer structure 2 as represented in Figure 1

By following the same procedure as in Example 1 by using the layers indicated below the multilayer structure 2 has been prepared.

With reference to Figure 1 the following layers were used:

- two carbon non-woven outer layers α1, made of PANO (pre-oxidized polyacrylonitrile C-fibers)-polyester fibers covered with a phenolic coating, having a total surface weight in the range from 100 to 120 g/m$^2$ with respect to a multilayer structure sample of 100 cm$^2$ and a thickness at 1 Kpa of 1 mm.
- three intermediate glass wool layers β, made of a glass wool fiber bonded with a thermosetting phenolic resin binder (R225) in an amount of 10% with respect to the total weight of the layer β, with very low formaldehyde emission, and comprising a flame retardant additive.
- two intermediate polyurethane layers γ having a density value of 25 g/l.

The polyurethane layer γ had a compression set in the range from 1000 to 1200 g/cm$^3$, a tear resistance in both directions of 14 N/cm$^2$ and an elongation value in both directions between 40-150%.

Example 3

Preparation of a multilayer structure 3, as represented in Figure 1

By following the same procedure as in Example 1 by using the layers indicated below the multilayer structure 3 has been prepared.

With reference to Figure 1 the following layers were used:

- two outer layers α1, made of needle punched non-woven layers comprising viscose-polyester, having a total surface weight in the range from 100 to 120 g/m$^2$ with respect to a multilayer structure sample of 100cm$^2$, a thickness of 0.78 mm and made of a blend 50/50 of viscose/black polyester-PET fibers, covered with a phenolic coating.
- three intermediate glass wool layers β, made of a glass wool fiber bonded with a thermosetting phenolic resin binder (R225) in an amount of 10% with respect to the total weight of the layer β, with very low formaldehyde emission, and comprising a flame retardant additive.
- two intermediate polyurethane layers γ having a density value of 22 g/l.

The polyurethane layer γ had a compression set in the range from 1000 to 1200 g/cm$^3$, a tear resistance in both directions of 14 N/cm$^2$ and an elongation value in both directions between 40-150%.

Example 4

Preparation of a multilayer structure 4, as represented in Figure 1

By following the same procedure as in Example 1 by using the layers indicated below the multilayer structure 4 has been prepared.

With reference to Figure 1 the following layers were used:

- two carbon non-woven outer layer $\alpha 1$, made of PANO (pre-oxidized polyacrylonitrile C-fibers)-polyester fibers covered with a phenolic coating, having a total surface weight in the range from 100 to 120 g/m$^2$ with respect to a multilayer structure sample of 100cm$^2$ and a thickness at 1 kPa of 1 mm.
- three intermediate glass wool layers $\beta$, made of a glass wool fiber bonded with a thermosetting phenolic resin binder (R225) in an amount of 10% with respect to the total weight of the layer $\beta$, with very low formaldehyde emission, and comprising a flame retardant additive.
- two intermediate polyurethane layers $\gamma$ having a density value of 22 g/l.

The polyurethane layer $\gamma$ had a compression set in the range from 1000 to 1200 g/cm$^3$, a tear resistance in both directions of 14 N/cm$^2$ and an elongation value in both directions between 40-150%.

Example 5

Comparison of the density and weight of the multilayer structure of the invention with respect to a prior art material

In the automotive field a prior art material, employed in the production of automotive components, such as wheelarch, airducting retractable hard top, trunk floor cover and underbody covers, is polyamide reinforced with 30% glass fibers (FCA STANDARD MS.50017). Said material is available on the market as PA GF30 (i.e. Durethan BKV 30H produced by Bayer, Zytel 73G30 produced by Dupont and TECHNYL C218 V30 produced by NYLTECH) and it is obtained with the known technology injection molding.

A sample of the above known material was compared with the multilayer structure of the invention.

Specifically, the multilayer structure of the invention according to Example 1, as represented in Figure 1 was used in the comparison test.

The prior art material (PA GF30) and the multilayer structure of the invention were tested for evaluating the density and the weight.

The prior art material resulted to have a density of 1400 kg/m$^2$ and a weight of 3.0 kg

The multilayer structure of the invention resulted to have a density of 543 kg/m$^2$ and a weight of 1.2 kg.

From the above reported results, the weight reduction achieved with the multilayer of the invention was around 61.2% with respect to the known prior art material. It is evident that the multilayer structure of the invention allows to prepare lighter automotive components, decreasing therefore their weight and the final vehicle mass.

Example 6

Comparison of different automotive components, made of the multilayer structure of the invention, with respect automotive components, made of the known prior art material

The automotive components, namely wheelarch, airducting retractable hard top, trunk floor cover and underbody covers, were prepared by using the same prior art material of Example 5. The obtained samples were used as comparative samples. The multilayer structure of Example 1 was used for preparing the same automotive components namely wheelarch, airducting retractable hard top, trunk floor cover and underbody covers.

The automotive components, made of the prior art material and the automotive components, made of the multilayer structure of the invention, were evaluated for the following properties: Lightweight, acoustic insulation, acoustic absorption, esthetical property, mechanical property, structural property, impact resistancestone, resilience and flame resistance.

The evaluation consisted in giving a score in a scale from "- - -" to "+ + +" with respect to the reference.

The results are reported in Table 1.

Table 1:

| Property | Automotive components | | | | |
|---|---|---|---|---|---|
| | Wheelarch | Air ducting | Retractable Hard Top | Trunk Floor Cover | Underbody covers |
| Lightweight | +++ | +++ | +++ | +++ | +++ |
| Acoustic insulation | +++ | +++ | +++ | +++ | +++ |
| Acoustic Absorption | ++ | n.d. | n.d. | n.d. | ++ |
| Aesthetical properties | ++ | ++ | ++ | ++ | ++ |
| Mechanical Properties | ++ | n.d. | ++ | ++ | ++ |
| Structural Properties | ++ | ++ | ++ | ++ | ++ |
| Impact Resistance - Stone | +++ | n.d. | n.d. | n.d. | +++ |
| Resiliency (Fragility) | +++ | +++ | +++ | +++ | +++ |
| Flame Resistance, STD (FMVSS 302) | +++ | +++ | +++ | +++ | +++ |
| Flame Resistance, (UL94) | +++ | +++ | n.d | n.d. | n.d. |
| n.d. not determined | | | | | |

The automotive components, made of the multilayer structure of the invention, showed better properties, with respect to automotive components, made of the prior art material.

Specifically, they were surprisingly lighter, more resistant towards stone impact, while having a better resilience and flame resistance with respect to comparative samples. Furthermore, the samples of the invention showed better acoustic absorption and better aesthetical, mechanical and structural properties.

Example 7

Evaluation of Flexural Modulus (E) of the multilayer structures of the invention

The multilayer structure 1, prepared according to Example 1, the multilayer structure 3, prepared according to Example 3, were evaluated by measuring the Flexural Modulus E via 3 points flexural method (Charpy Method, according to ISO179 - plane sheets).

Specifically, ten rectangular samples (50 x 160 x 3 mm thickness) of the multilayer structures 1 and 3, respectively, were provided.

All the samples of the invention were tested through a 10 mm diameter punch with a load speed of 10 mm/min, with a distance between the supports 16 times the multilayer structure thickness (100 mm) and with a press pressure of 150 bar.

The Flexural Modulus (E) was evaluated according to Formula (I):

$$E = \frac{1}{4} * \frac{P}{F} * \frac{l^3}{b * s^3}$$

wherein

P is the load (N)
$b$ is the test tube width (mm)
$l$ is the distance between supports (mm)
s is the test tubes thickness (mm)
P/F is the slope of the initial straight section of the deformation load curve.

The results for the samples of the multilayer structure 1 of the invention and of the multilayer structure 3 are reported in the following Tables 2 and 3, respectively.

Table 2:

| Samples | 1 | 2 | 3 | 4 | 5 | 6 | 7 | 8 | 9 | 10 |
|---|---|---|---|---|---|---|---|---|---|---|
| Max. Load (N) | 64.0 | 75.5 | 61.5 | 54.0 | 76.0 | 78.0 | 74.5 | 49.0 | 60.5 | 42.5 |
| Flex. Modulus (E) | 462.9 | 259.5 | 548.7 | 457.9 | 383.6 | 510.0 | 528.2 | 472.6 | 334.0 | 468.5 |

Table 3:

| Samples | 1 | 2 | 3 | 4 | 5 | 6 | 7 | 8 | 9 | 10 |
|---|---|---|---|---|---|---|---|---|---|---|
| Max. Load (N) | 71.0 | 60.0 | 73.0 | 63.5 | 53.0 | 54.0 | 60.5 | 56.0 | 48.5 | 56.0 |
| Flex. Modulus | 1480.9 | 1201.3 | 1458.5 | 1519.5 | 1380.6 | 1503.9 | 1166.8 | 1570.7 | 1290.1 | 1583.0 |

The average Flexural Modulus values have been calculated for both multilayer structures of the invention and the following results were obtained:

|  | Max. Load | Flex. Modulus |
|---|---|---|
| Multilayer structure 1 | 63.6 | 442.6 |
| Multilayer structure 3 | 59.6 | 1415.5 |

Both multilayer structures of the invention showed good flexibility properties. The multilayer structure 1, prepared according to Example 1, comprising therefore the at least one intermediate polyurethane layer γ with a density value of 25 g/l, showed a very good flexibility. The multilayer structure 3, prepared according to Example 3, comprising therefore the at least one intermediate polyurethane layer γ with a density value of 22 g/l, showed around 31% Flexibility Modulus increase, with respect to the multilayer structure 1. The multilayer structure 3 thus resulted to be preferred for the evaluated property and stress handling.

Example 8

Evaluation of Tensile Resistance of the multilayer structures of the invention

The same samples used in example 7 were also evaluated for tensile Resistance according to ISO179.
Specifically, ten rectangular samples (50 x 160 x 3 mm thickness) of the multilayer structures 1 and 3, respectively, were provided and pulled with 100 mm/min of advancing speed, till breaking.
The Tensile Resistance (R) was evaluated according to Formula (II):

$$R = \frac{3}{2} * \frac{P * l}{b * s^2}$$

wherein

P is the load (N)
$b$ is the test tube width (mm)
$l$ is the distance between supports (mm)
s is the test tubes thickness

The results for the samples of the multilayer structures 1 and 3 are reported in Tables 4 and 5, respectively.

Table 4:

| Samples | 1 | 2 | 3 | 4 | 5 | 6 | 7 | 8 | 9 | 10 |
|---|---|---|---|---|---|---|---|---|---|---|
| Tensile Resistance | 6.3 | 4.4 | 7.5 | 6.6 | 5.6 | 7.8 | 7.9 | 7.6 | 4.7 | 6.0 |

Table 5:

| Samples | 1 | 2 | 3 | 4 | 5 | 6 | 7 | 8 | 9 | 10 |
|---|---|---|---|---|---|---|---|---|---|---|
| Tensile Resistance | 14.7 | 11.7 | 12.4 | 15.4 | 12.1 | 11.7 | 10.7 | 12.6 | 11.7 | 10.1 |

The average tensile resistance values have been calculated for both multilayer structures 1 and 3, thus obtaining the following results:

| | Max. Load | Tensile Resistance |
|---|---|---|
| Multilayer structure 1 | 63.6 | 6.4 |
| Multilayer structure 3 | 59.6 | 12.3 |

Both multilayer structures of the invention showed good tensile resistance properties. The multilayer structure 1 showed good tensile resistance. The multilayer structure 3, prepared according to Example 3, comprising therefore the at least one intermediate polyurethane layer $\gamma$ with a density value of 22 g/l, showed around 52% Tensile Resistance increase, with respect to the multilayer structure, prepared according to Example 1, comprising therefore the at least one intermediate polyurethane layer $\gamma$ with a density value of 25 g/l.

The multilayer structure 3 thus resulted to be preferred for its higher resistance under mechanical and structural stress

Example 9

Preparation of the multilayer structure 5 of the invention, as represented in Figure 2

By following the same procedure as in Example 1 by using the layers indicated below the multilayer structure 5, having a different layer sequence, has been prepared.

With reference to Figure 2 the following layers were used:

-    two outer layers $\alpha$1, made of needle punched non-woven layers comprising viscose-polyester, having a total surface weight in the range from 100 to 120 g/m$^2$ with respect to a multilayer structure sample of 100 cm$^2$, a thickness of 0.78 mm and made of a blend 50/50 of viscose/black polyester-PET fibers, covered with a phenolic coating.
-    two intermediate polyurethane layers $\gamma$ having a density value of 25 g/l.
-    three intermediate glass wool layers $\beta$, made of a glass wool fiber bonded with a thermosetting phenolic resin binder (R225) in an amount of 10% with respect to the total weight of the layer $\beta$, with very low formaldehyde emission, and comprising a flame retardant additive.

Example 10

Preparation of the multilayer structure 6 of the invention, as represented in Figure 2

By following the same procedure as in Example 1 by using the layers indicated below the multilayer structure 6 has been prepared.

With reference to Figure 2 the following layers were used:

-    two carbon non-woven outer layers $\alpha$1, made of PANO (pre-oxidized polyacrylonitrile C-fibers)-polyester fibers covered with a phenolic coating, having a total surface weight in the range from 100 to 120 g/m$^2$ with respect to a multilayer structure sample of 100 cm$^2$ and a thickness at 1 Kpa of 1 mm.
-    three intermediate glass wool layers $\beta$, made of a glass wool fiber bonded with a thermosetting phenolic resin binder (R225) in an amount of 10% with respect to the total weight of the layer $\beta$, with very low formaldehyde emission, and comprising a flame retardant additive.
-    two intermediate polyurethane layers $\gamma$ having a density value of 25 g/l.

Example 11

# EP 4 010 185 B1

<u>Evaluation of Acoustic Performances of the multilayer structures of the invention</u>

The multilayer structure 5, prepared according to Example 9 and the multilayer structure 6, prepared according to Example 10, were compared for their acoustic performances.

Specifically, the multilayer structure 5 had a weight of 3.43 g, a weight per area of 2157 g/m², a thickness of 2.7 mm and a density of 811 kg/m³, while the multilayer structure 6 had a weight of 3.66 g, a weight per area of 2301 g/m², a thickness of 3.0 mm and a density of 767 kg/m³.

The acoustic test was performed via Impedance Tube (Kundt Tube) ASTM 1050.95, according to ISO 10534-2, at 21°C, with 49% humidity. The test was repeated twice with airgap =0 mm and 10 mm.

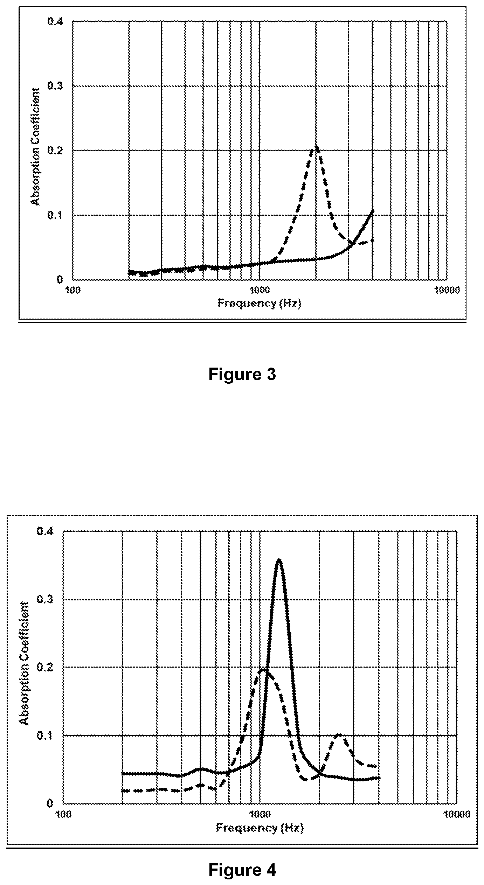

The results are reported in figures 3 and 4, respectively.

In Figure 3 (airgap =0 mm) and Figure 4 (airgap=10 mm) the dashed line represents the multilayer structure 6 prepared according to Example 10, and the black solid line represents the multilayer structure 5 prepared according to Example 9.

The multilayer structure 6, showed better noise absorption without airgap, while the multilayer structure 5, absorbed effectively the acoustic waves in presence of a 10 mm airgap.

<u>Example 12</u>

<u>Evaluation of the Resistance performances via "stone chipping" test of the multilayer structure of the invention.</u>

The multilayer structure 5, prepared according to Example 9, was tested for its resistance properties.

Test conditions used were according to a Global Automotive Customer specification. The rocks were loaded in a Gravelometer for launching towards the test multilayers. The experiment goal is to test the material resistance to gravel impact, thus establishing the material reliability against corrosion. Therefore, after the rock treatment, there shall be no holes, cracking or peeling on the specimen and no water flowed through the sample.

The conditions for the exposure test and chipping resistance were the following: 10 cycles of 500g Basalt (7 rocks) were used at a pressure of 0.4 MPa.

The multilayer structure sample was 150 x 100 mm, 4mm thick. The angle used for the experiment was 90°C and the distance between the launching area and the test specimens was 35 cm.

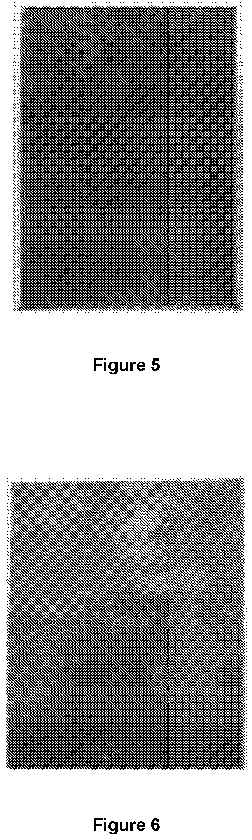

The multilayer structure 5 of the invention showed very good resistance towards stone impact. No holes were formed after the treatment, indicating high stiffness and therefore protection against corrosion, as shown in Figure 5.

<u>Example 13</u>

<u>Evaluation of Resistance performances via "stone chipping" test of the multilayer structure of the invention.</u>

The multilayer structure 6 prepared according to Example 10 was tested for its resistance properties.

The test was performed as indicated in Example 12.

The multilayer structure showed very good resistance towards stones impact. No holes were formed after the treatment, indicating high stiffness and therefore protection against corrosion, as shown in Figure 6.

**Claims**

1. A multilayer structure comprising:

    - two outer layers α1, made of a non-woven material;
    - at least one intermediate layer β, made of a glass wool fiber;
    - at least one intermediate layer γ of polyurethane automotive scraps wherein the at least one intermediate layer γ of polyurethane automotive scraps has a density value in the range from 20 to 30 g/l and a compression set of 1000-1200 g/cm² as measured according to DIN EN ISO 1856.

2. The multilayer structure according to claim 1, wherein the at least one intermediate layer β and/or the at least one intermediate layer are repeated, independently from each other, at least twice.

3. The multilayer structure according to claim 1 having the following layer sequence:

    1) an outer layer α1, made of a non-woven material;

<center>14</center>

2) at least one intermediate layer β, made of a glass wool fiber;
3) at least one intermediate layer γ of polyurethane automotive scraps; and
4) an outer layer α1, made of a non-woven material.

4. The multilayer structure according to claim 1 having the following layer sequence:

1) an outer layer α1, made of a non-woven material;
2) at least one intermediate layer γ of polyurethane automotive scraps;
3) at least one intermediate layer β, made of a glass wool fiber; and
4) an outer layer α1, made of a non-woven material.

5. The multilayer structure according to claim 3 or 4, wherein the layers 2) and 3) are repeated at least twice, independently from each other.

6. The multilayer structure according to anyone of claims 1-5, wherein the at least one intermediate layer γ of polyurethane automotive scraps has a density value in the range from 22 to 25 g/l, preferably about 22 g/l.

7. The multilayer structure according to anyone of claims 1-6, wherein the at least one intermediate layer γ of polyurethane automotive scraps has an elongation value at break in both directions in a range from 40 to 150 %, according to EN ISO 9073-3.

8. The multilayer structure according to anyone of claims 1-7, wherein the at least one intermediate layer γ of polyurethane automotive scraps has a tear resistance in both directions of 14N/cm$^2$ according to DIN EN ISO 1798.

9. The multilayer structure according to anyone of claims 1-8, wherein the outer layer α1 made of a non-woven material is viscose-polyester-PET based fibers covered with a phenolic coating.

10. The multilayer structure according to anyone of claims 1-8, wherein the outer layer α1 made of a non-woven material is a carbon non-woven material.

11. The multilayer structure according to anyone of claims 1-10 wherein the at least one intermediate layer β made of a glass wool fiber is bonded with a thermosetting phenolic resin binder in an amount of 10% with respect to the total weight of the layer β, and preferably it comprises a flame retardant additive.

12. The multilayer structure according to anyone of claims 1-11, wherein

- flexural modulus (E) is in the range from 380 to 1600 N/mm$^2$, as measured according to ISO179, preferably 550-950 N/mm$^2$;
- load to break is in the range from 40 to 80 N as measured according to ISO179; and
- tensile resistance is in the range from 4 to 16 N/mm$^2$ according to ISO179.

13. An automotive component made of the multilayer structure according to anyone of claims 1-12.

14. The automotive component according to claim 13, wherein said automotive component is selected from the group consisting of a wheelarch, an air ducting, a retractable, hard top, trunk floor cover and an underbody cover.

15. A process for preparing the multilayer structure according to anyone of claims 1-12, comprising the following steps:

a) providing polyurethane automotive scraps having a density value in the range from 20 to 30 g/l;
b) cutting a glass wool fiber into sheets having a bidimensional shape suitable for a molding step h), thus obtaining at least one sheet of layer β, made of a glass wool fiber;
c) cutting the polyurethane automotive scraps of step a) into sheets having a bidimensional shape suitable for a molding step h), thus obtaining at least one sheet of layer γ, of polyurethane automotive scraps having a density value in the range from 20 to 30 g/l and a compression set of 1000-1200 g/cm$^2$ as measured according to DIN EN ISO 1856;
d) cutting a non-woven material into sheets having a bidimensional shape twice of the bidimensional shape of layer β or of layer γ, thus obtaining at least one non-woven sheet;
e) folding the at least one non-woven sheet of step d), thus obtaining two outer layers α1;

f) inserting the layers β and γ, of steps b) and c), respectively between the two outer layers α1 of e) thus obtaining a sandwich assembly;
g) uploading the sandwich assembly into a heat mold device;
h) molding the uploaded sandwich assembly via thermocompression, at a temperature in the range from 190 to 200°C;
i) obtaining the multilayer structure of the invention.

16. The process according to claim 15, wherein the cutting of steps b), c) and d) are performed with at least one blade having a force of 25 kg/mm.

**Patentansprüche**

1. Mehrschichtstruktur, umfassend:

   - zwei Außenschichten α1, die aus einem Vliesstoff hergestellt sind;
   - mindestens eine Zwischenschicht β, die aus Glaswollfaser hergestellt ist;
   - mindestens eine Zwischenschicht γ aus Polyurethan-Kraftfahrzeugausschüssen, wobei die mindestens eine Zwischenschicht γ aus Polyurethan-Kraftfahrzeugausschüssen einen Dichtewert im Bereich von 20 bis 30 g/l und einen Druckverformungsrest von 1000-1200 g/cm$^2$, gemessen nach DIN EN ISO 1856, aufweist.

2. Mehrschichtstruktur nach Anspruch 1, wobei die mindestens eine Zwischenschicht β und/oder die mindestens eine Zwischenschicht γ unabhängig voneinander mindestens zweimal wiederholt werden.

3. Mehrschichtstruktur nach Anspruch 1, welche die folgende Schichtfolge aufweist:

   1) eine Außenschicht α1, die aus einem Vliesstoff hergestellt ist;
   2) mindestens eine Zwischenschicht β, die aus Glaswollfaser hergestellt ist;
   3) mindestens eine Zwischenschicht γ aus Polyurethan-Kraftfahrzeugausschüssen; und
   4) eine Außenschicht α1, die aus einem Vliesstoff hergestellt ist.

4. Mehrschichtstruktur nach Anspruch 1, welche die folgende Schichtfolge aufweist:

   1) eine Außenschicht α1, die aus einem Vliesstoff hergestellt ist;
   2) mindestens eine Zwischenschicht γ aus Polyurethan-Kraftfahrzeugausschüssen;
   3) mindestens eine Zwischenschicht β, die aus Glaswollfaser hergestellt ist; und
   4) eine Außenschicht α1, die aus einem Vliesstoff hergestellt ist.

5. Mehrschichtstruktur nach Anspruch 3 oder 4, wobei die Schichten 2) und 3) mindestens zweimal unabhängig voneinander wiederholt werden.

6. Mehrschichtstruktur nach einem der Ansprüche 1-5, wobei die mindestens eine Zwischenschicht γ aus Polyurethan-Kraftfahrzeugausschüssen einen Dichtewert im Bereich von 22 bis 25 g/l, vorzugsweise etwa 22 g/l, aufweist.

7. Mehrschichtstruktur nach einem der Ansprüche 1-6, wobei die mindestens eine Zwischenschicht γ aus Polyurethan-Kraftfahrzeugausschüssen einen Bruchdehnungswert in beiden Richtungen in einem Bereich von 40 bis 150% gemäß EN ISO 9073-3 aufweist.

8. Mehrschichtstruktur nach einem der Ansprüche 1-7, wobei die mindestens eine Zwischenschicht γ aus Polyurethan-Kraftfahrzeugausschüssen eine Reißfestigkeit in beiden Richtungen von 14 N/cm$^2$ gemäß DIN EN ISO 1798 aufweist.

9. Mehrschichtstruktur nach einem der Ansprüche 1-8, wobei die Außenschicht α1, die aus einem Vliesstoff hergestellt ist, aus Fasern auf Viskose-Polyester-PET-Basis besteht, die mit einer Phenolbeschichtung überzogen sind.

10. Mehrschichtstruktur nach einem der Ansprüche 1-8, wobei die aus einem Vliesstoff hergestellte Außenschicht α1 ein Kohlenstoff-Vliesstoff ist.

11. Mehrschichtstruktur nach einem der Ansprüche 1-10, wobei die mindestens eine aus Glaswollfasern hergestellte Zwischenschicht β mit einem wärmehärtbaren Phenolharz-Bindemittel in einer Menge von 10%, bezogen auf das Gesamtgewicht der Schicht β, gebunden ist und vorzugsweise einen flammhemmenden Zusatzstoff umfasst.

12. Mehrschichtstruktur nach einem der Ansprüche 1-11, wobei

- der Biegemodul (E) im Bereich von 380 bis 1600 N/mm² liegt, gemessen nach ISO 179, vorzugsweise 550-950 N/mm²;
- die Bruchlast im Bereich von 40 bis 80 N liegt, gemessen nach ISO 179; und
- die Zugfestigkeit im Bereich von 4 bis 16 N/mm² gemäß ISO 179 liegt.

13. Kraftfahrzeugkomponente, die aus der Mehrschichtstruktur nach einem der Ansprüche 1-12 hergestellt ist.

14. Kraftfahrzeugkomponente nach Anspruch 13, wobei die Kraftfahrzeugkomponente aus der Gruppe ausgewählt ist, die aus einem Radkasten, einer Luftführung, einem einklappbaren Hardtop, einer Kofferraumbodenabdeckung und einer Unterbodenabdeckung besteht.

15. Verfahren zur Herstellung der Mehrschichtstruktur nach einem der Ansprüche 1-12, das die folgenden Schritte umfasst:

a) Bereitstellen von Polyurethan-Kraftfahrzeugausschüssen, die einen Dichtewert im Bereich von 20 bis 30 g/l aufweisen;
b) Schneiden einer Glaswollfaser zu Platten mit einer zweidimensionalen Form, die für einen Formungsschritt h) geeignet ist, wodurch mindestens eine Platte der Schicht β erhalten wird, die aus Glaswollfaser hergestellt ist;
c) Schneiden der Polyurethan-Kraftfahrzeugausschüsse aus Schritt a) zu Platten mit einer zweidimensionalen Form, die für einen Formungsschritt h) geeignet ist, wodurch mindestens eine Platte der Schicht γ aus Polyurethan-Kraftfahrzeugausschüssen erhalten wird, die einen Dichtewert im Bereich von 20 bis 30 g/l und einem Druckverformungsrest von 1000-1200 g/cm², gemessen nach DIN EN ISO 1856, aufweist;
d) Schneiden eines Vliesstoffs zu Platten mit einer zweidimensionalen Form, die doppelt so groß ist wie die zweidimensionale Form der Schicht β oder der Schicht γ, wodurch mindestens eine Vliesstoffplatte erhalten wird;
e) Falten der mindestens einen Vliesstoffplatte aus Schritt d), wodurch zwei Außenschichten α1 erhalten werden;
f) Einfügen der Schichten β und γ aus den Schritten b) und c) jeweils zwischen den beiden Außenschichten α1 aus e), wodurch eine Sandwichanordnung erhalten wird;
g) Laden der Sandwichanordnung in eine Wärmeformvorrichtung;
h) Formen der geladenen Sandwichanordnung durch Wärmekompression bei einer Temperatur im Bereich von 190 bis 200 °C;
i) Erhalten der Mehrschichtstruktur der Erfindung.

16. Verfahren nach Anspruch 15, wobei das Schneiden in den Schritten b), c) und d) mit mindestens einer Klinge mit einer Kraft von 25 kg/mm durchgeführt wird.

**Revendications**

1. Structure multicouche comprenant :

- deux couches externes α1, réalisées en matériau non tissé ;
- au moins une couche intermédiaire β, constituée d'une fibre de laine de verre ;
- au moins une couche intermédiaire γ de ferraille automobile en polyuréthane dans laquelle l'au moins une couche intermédiaire γ de ferraille automobile en polyuréthane a une valeur de densité dans la plage de 20 à 30 g/l et une compression rémanente de 1000 à 1200 g/cm² telle que mesurée selon DIN EN ISO 1856.

2. Structure multicouche selon la revendication 1, dans laquelle l'au moins une couche intermédiaire β et/ou l'au moins une couche intermédiaire γ sont répétées, indépendamment l'une de l'autre, au moins deux fois.

3. Structure multicouche selon la revendication 1 ayant la séquence de couches suivante :

1) une couche externe α1, réalisée en matériau non tissé ;

2) au moins une couche intermédiaire β, constituée d'une fibre de laine de verre

3) au moins une couche intermédiaire γ de ferraille automobile en polyuréthane ; et

4) une couche externe α1, réalisée en matériau non tissé.

4. Structure multicouche selon la revendication 1 ayant la séquence de couches suivante :

1) une couche externe α1, réalisée en matériau non tissé ;

2) au moins une couche intermédiaire γ de ferraille automobile en polyuréthane

3) au moins une couche intermédiaire β, constituée d'une fibre de laine de verre ; et

4) une couche externe α1, réalisée en matériau non tissé.

5. Structure multicouche selon la revendication 3 ou 4, dans laquelle les couches 2) et 3) sont répétées au moins deux fois, indépendamment l'une de l'autre.

6. Structure multicouche selon l'une quelconque des revendications 1 à 5, dans laquelle l'au moins une couche intermédiaire γ de ferraille automobile en polyuréthane a une valeur de densité dans la plage de 22 à 25 g/l, de préférence d'environ 22 g/l.

7. Structure multicouche selon l'une quelconque des revendications 1 à 6, dans laquelle l'au moins une couche intermédiaire γ de ferraille automobile en polyuréthane a une valeur d'allongement à la rupture dans les deux directions dans une plage de 40 à 150 %, selon EN ISO 9073-3.

8. Structure multicouche selon l'une quelconque des revendications 1 à 7, dans laquelle l'au moins une couche intermédiaire γ de ferraille automobile en polyuréthane a une résistance à la déchirure dans les deux directions de 14N/cm$^2$ selon DIN EN ISO 1798.

9. Structure multicouche selon l'une quelconque des revendications 1 à 8, dans laquelle la couche externe α1 réalisée en matériau non tissé est constituée de fibres à base de viscose-polyester-PET recouvertes d'un revêtement phénolique.

10. Structure multicouche selon l'une quelconque des revendications 1 à 8, dans laquelle la couche externe α1 réalisée en matériau non tissé est un matériau non tissé en carbone.

11. Structure multicouche selon l'une quelconque des revendications 1 à 10, dans laquelle l'au moins une couche intermédiaire β constituée d'une fibre de laine de verre est liée avec un liant de résine phénolique thermodurcissable en une quantité de 10 % par rapport au poids total de la couche β, et de préférence elle comprend un additif ignifuge.

12. Structure multicouche selon l'une quelconque des revendications 1 à 11, dans laquelle

- le module de flexion (E) est compris entre 380 et 1600 N/mm$^2$, tel que mesuré selon ISO179, de préférence entre 550 et 950 N/mm$^2$;
- la charge à casser est comprise entre 40 et 80 N, telle que mesurée selon ISO179 ; et
- la résistance à la traction est comprise entre 4 et 16 N/mm$^2$ selon ISO179.

13. Composant automobile constitué de la structure multicouche selon quelconque des revendications 1 à 12.

14. Composant automobile selon la revendication 13, dans lequel ledit composant automobile est choisi dans le groupe constitué d'un passage de roue, d'un conduit d'air, d'un toit rigide rétractable, d'un revêtement de plancher de coffre et d'un revêtement de soubassement.

15. Procédé de préparation de la structure multicouche selon quelconque des revendications 1 à 12, comprenant les étapes suivantes :

a) fournir de la ferraille automobile en polyuréthane ayant une valeur de densité dans la plage de 20 à 30 g/l ;

b) couper une fibre de laine de verre en feuilles ayant une forme bidimensionnelle appropriée pour une étape de moulage h), obtenant ainsi au moins une feuille de couche β, faite d'une fibre de laine de verre ;

c) couper de la ferraille automobile en polyuréthane de l'étape a) en feuilles ayant une forme bidimensionnelle appropriée pour une étape de moulage h), obtenant ainsi au moins une feuille de couche γ, de ferraille automobile en polyuréthane ayant une valeur de densité dans la plage de 20 à 30 g/l et une compression rémanente de 1000 à 1200 g/cm$^2$, tel que mesurée selon DIN EN ISO 1856 ;

d) couper un matériau non tissé en feuilles ayant une forme bidimensionnelle double de la forme bidimensionnelle de la couche β ou de la couche γ, obtenant ainsi au moins une feuille non tissée ;

e) plier l'au moins une feuille non tissée de l'étape d), obtenant ainsi deux couches externes α1 ;

f) insérer les couches β et γ, des étapes b) et c), respectivement entre les deux couches externes α1 de e) obtenant ainsi un assemblage en sandwich ;

g) charger l'assemblage en sandwich dans un dispositif de moulage à chaud ;

h) mouler l'assemblage en sandwich chargé par thermocompression, à une température dans la plage de 190 à 200 °C ;

i) obtenir la structure multicouche de l'invention.

16. Procédé selon la revendication 15, dans lequel la coupe des étapes b), c) et d) est effectuée avec au moins une lame ayant une force de 25 kg/mm.

| | |
|---|---|
| ☐ | non-woven layer α1 |
| ▨ | glass wool layer β |
| ▨ | polyurethane layer γ |
| ▨ | glass wool layer β |
| ▨ | polyurethane layer γ |
| ▨ | glass wool layer β |
| ☐ | non-woven layer α1 |

**Figure 1**

| | |
|---|---|
| ☐ | non-woven layer α1 |
| ▨ | polyurethane layer γ |
| ▨ | glass wool layer β |
| ▨ | glass wool layer β |
| ▨ | glass wool layer β |
| ▨ | polyurethane layer γ |
| ☐ | non-woven layer α1 |

**Figure 2**

Figure 3

Figure 4

Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014124972 A1